# EUROPEAN PATENT APPLICATION

(11) **EP 4 350 810 A1**
(43) Date of publication of application: **10.04.2024**
(21) Application number: 23798871.2
(22) Date of filing: 25.08.2023
(51) Int. Cl.: H01M 4/505, H01M 4/525, H01M 4/131, H01M 10/0525

(54) **TERNARY POSITIVE ELECTRODE MATERIAL AND PREPARATION METHOD THEREFOR, POSITIVE ELECTRODE SHEET, SECONDARY BATTERY, AND ELECTRONIC DEVICE**

(30) Priority: 26.08.2022 CN 202211035117
(71) Applicant: Tianjin B&M Science And Technology Co., Ltd., Tianjin 300384 (CN)
(72) Inventor: CHEN, Dexian, Tianjin 300384 (CN); WANG, Huimin, Tianjin 300384 (CN); LI, Qi, Tianjin 300384 (CN); LV, Fei, Tianjin 300384 (CN); XU, Ning, Tianjin 300384 (CN)
(74) Representative: Gill Jennings & Every LLP
(86) International application number: PCT/CN2023/114902
(87) International publication number: WO 2024/041632

(57) **Abstract**

The present application provides a ternary cathode material, a method for preparing the same, a cathode plate, a secondary battery, and an electronic device. The ternary cathode material includes a ternary cathode material matrix including a doped region. The doped region includes an aluminum-rich doped region distributed within a bulk phase of the ternary cathode material matrix, and a titanium-rich doped region distributed in a surface layer of the ternary cathode material matrix.

## Description

### CROSS-REFERENCE TO RELATED APPLICATIONS

This application claims priority to Chinese patent application No. 202211035117.4, filed on August 26, 2022, and titled "TERNARY CATHODE MATERIAL, METHOD FOR PREPARING THE SAME, CATHODE PLATE, SECONDARY BATTERY, AND ELECTRONIC DEVICE", the contents of which is hereby incorporated by reference in its entirety.

### TECHNICAL FIELD

The present application relates to the technical field of electrochemistry, in particular to a ternary cathode material, a method for preparing the same, a cathode plate, a secondary battery, and an electronic device.

### BACKGROUND

The secondary batteries such as the representative lithium-ion batteries possess advantages of high operating voltage, high energy density, good safety, no memory effect, etc. and have achieved great success in various fields, including portable electronic devices, electric vehicles, and hybrid vehicles. Currently, in conventional secondary batteries, ternary materials containing nickel, cobalt, and manganese are widely used as cathode materials due to their advantages such as high capacity, high energy density, etc.

### SUMMARY

In view of the above, the present application provides a ternary cathode material, a method for preparing the same, a cathode plate, a secondary battery, and an electronic device.

A first aspect of the present application provides a ternary cathode material. The ternary cathode material includes a ternary cathode material matrix including a doped region. The doped region includes an aluminum-rich doped region distributed within a bulk phase of the ternary cathode material matrix, and a titanium-rich doped region distributed in a surface layer of the ternary cathode material matrix.

In any embodiment, optionally, the ternary cathode material matrix further includes a transitional region located between the aluminum-rich doped region and the titanium-rich doped region. A Li-Ti-Al-O eutectic structure is distributed in the transitional region.

In any embodiment, optionally, the average particle size of ternary cathode material particles is in a range of 4 µm to 20 µm.

In any embodiment, optionally, the mass percentage of aluminum (Al) elements in the aluminum-rich doped region is in a range of 0.01% to 10%, based on the total mass of the ternary cathode material.

In any embodiment, optionally, the mass percentage of titanium (Ti) elements in the titanium-rich doped region is in a range of 0.01% to 10%, based on the total mass of the ternary cathode material.

In any embodiment, optionally, the ternary cathode material matrix is represented by a molecular formula of Li_{w}NiₓCo_{y}Mn_{1-x-y}O₂, wherein 0.95≤w≤1.05, 0.33≤x<0.95, 0.05<y≤0.77, and 0≤z<1. Optionally, w=1, Li_{w}NiₓCo_{y}Mn_{1-x-y}O₂ is LiNiₓCo_{y}Mn_{1-x-y}O₂.

A second aspect of the present application provides a method for preparing a ternary cathode material. The method includes:
providing a ternary cathode precursor and a dopant-containing sol, wherein the dopant is a compound represented by M-A-X (hereinafter referred to as the MAX compound), and M includes Ti, A includes Al, and X includes C or N.
mixing the ternary cathode precursor, the dopant-containing sol, and a lithium salt together to obtain a pre-doped material; and
sintering the pre-doped material multiple times to form a doped region in the ternary cathode material matrix, wherein the doped region includes an aluminum-rich doped region distributed within a bulk phase of the ternary cathode material matrix and a titanium-rich doped region distributed in a surface layer of the ternary cathode material matrix.

In some embodiments, the sintering the pre-doped material multiple times includes:
performing a first sintering under a first condition; and
performing a second sintering under a second condition,
wherein the first condition includes a lower sintering temperature and a shorter sintering time, and the second condition includes a higher sintering temperature and a longer sintering time.

In any embodiment, optionally, the sintering the pre-doped material multiple times includes:
performing a first sintering to the pre-doped material at a temperature of 400°C to 500°C for 3 hours to 5 hours to obtain a first sintered material; and
performing a second sintering to the first sintered material at a temperature of 700°C to 1000°C for 10 hours to 20 hours to obtain the ternary cathode material.

In any embodiment, optionally, the first sintering temperature is in a range of 450°C to 500°C, and the sintering time is in a range of 3.5 hours to 4.5 hours.

In any embodiment, optionally, the second sintering temperature is in a range of 750°C to 950°C, and the sintering time is in a range of 12 hours to 18 hours.

In any embodiment, optionally, a temperature raising rate in the first sintering is less than or equal to 3°C/min, a temperature raising rate in the second sintering is less than or equal to 5°C/min, and the temperature raising rate in the first sintering is less than the temperature raising rate in the second sintering.

In any embodiment, optionally, the mixing the ternary cathode precursor, the dopant-containing sol, and the lithium salt together includes:
making the ternary cathode precursor contact with the dopant-containing sol, and mixing the ternary cathode precursor with the dopant-containing sol well to obtain a mixture; and
drying the mixture and then mixing with the lithium salt well.

In any embodiment, optionally, the ternary cathode precursor includes nickel, cobalt, and manganese elements. Further, the ternary cathode precursor includes one or more of hydrated oxides, hydroxides, chlorides, carboxylates, acetates, or carbonates of divalent nickel, cobalt, and manganese.

In any embodiment, optionally, the ternary cathode precursor is represented by a molecular formula of NiₓCo_{y}Mn_{1-x-y}(OH)₂, wherein 0.33<x<0.95, 0.05<y<0.77.

In any embodiment, optionally, the average particle size of ternary cathode precursor particles is in a range of 4 µm to 20 µm.

In any embodiment, optionally, the lithium salt includes one or more of lithium carbonate, lithium hydroxide, lithium nitrate, lithium acetate, or lithium chloride.

In any embodiment, optionally, the mass ratio of the ternary cathode precursor to the MAX compound is in a range of 1:0.0005 to 1:0.05.

In any embodiment, optionally, the molar ratio of the lithium elements in the lithium salt to a total amount of transition metal elements in the ternary cathode precursor is in a range of 1.0:1 to 1.1:1.

In any embodiment, optionally, the step of providing the dopant-containing sol includes:
making the MAX compound particles contact with a dispersant in deionized water, and mixing the MAX compound particles with the dispersant in the deionized water to obtain a mixture solution; and
ball-milling the mixture solution to achieve an average particle size of 20 nm to 200 nm for the MAX compound particles.

In any embodiment, optionally, the mass ratio of the MAX compound particles to the dispersant is in a range of 1:0.01 to 1:1.5.

In any embodiment, optionally, the dopant-containing sol has a solid content of 5% to 50%.

In any embodiment, optionally, the MAX compound is represented by a molecular formula of TiₘAlCₙ, wherein 0<m<5, 0<n<5.

In any embodiment, optionally, the MAX compound is represented by a molecular formula of Tiₙ₊₁AlCₙ, wherein n is 1, 2 or 3.

In any embodiment, optionally, the MAX compound is represented by a molecular formula of Ti₃AlC₂.

In any embodiment, optionally, the dispersant includes one or more of hexadecyltrimethylammonium chloride, dodecyltrimethylammonium chloride, hexadecylpyridinium chloride, sodium benzenesulfonate, lauroyl glutamic acid, or diethanolamide.

A third aspect of the present application provides a cathode plate. The cathode plate includes the ternary cathode material provided in the first aspect of the present application, or the ternary cathode material prepared by the method provided in the second aspect of the present application.

A fourth aspect of the present application provides a secondary battery. The secondary battery includes the cathode plate provided in the third aspect of the present application.

A fifth aspect of the present application provides an electronic device. The electronic device includes the secondary battery provided in the fourth aspect of the present application.

The ternary cathode material provided in embodiments of the present application includes a doped region, and the doped region includes an aluminum-rich doped region formed within the bulk phase and a titanium-rich doped region formed in the surface layer. This doped region has the following advantages. (1) The Al elements provided in the aluminum-rich doped region within the bulk phase of the ternary cathode material can form Al-O bonds with strong bonding energy in the bulk phase. These bonds effectively stabilizethe lattice structure of the ternary cathode material during deep charge-discharge cycles in the secondary battery, inhibiting structural collapse during the cycling, and improving the stability of the crystal structure of the ternary cathode material. Thus, the structural stability and cycling performance of the secondary battery can be effectively improved. (2) The Ti elements provided by the titanium-rich doped region in the surface layer of the ternary cathode material can form Ti⁴⁺/Ti³⁺ redox couples, which increase the charge carrier concentration and effectively improve the electronic/ionic conductivity of the micro-region at the surface of the material, thereby improving the rate performance of the ternary cathode material and the secondary battery. (3) The Ti elements provided by the titanium-rich doped region in the surface layer of the ternary cathode material can form Ti-O bonds, which reduce the activity of oxygen atoms in the surface layer, inhibit the reconstruction of surface structure caused by the migration of oxygen atoms, and inhibit the distortion of crystal lattice in the surface layer, thereby further improving the structural stability of crystal lattice of the ternary cathode material, and improving the structural stability and cycling performance of the secondary battery. (4) In the doped region formed in the ternary cathode material, an interface region can be further formed between the aluminum-rich doped region within the bulk phase and the titanium-rich doped region in the surface layer, and the interface region includes both Al elements and Ti elements, which can fully exert the synergistic effect of Al elements and Ti elements on improving the crystal structure of the ternary cathode material, and facilitate forming a "super-stable region" beneficial to the stability of the crystal structure, thereby further improving the structural stability and cycling performance of the secondary battery.

### BRIEF DESCRIPTION OF THE DRAWINGS

FIG. 1 is a schematic structural view of a ternary cathode material particle in an embodiment of the present application.
FIG. 2 is a graph showing XRD patterns of ternary cathode materials of Examples 1 to 2 and Comparative Examples 1 to 3.
FIG. 3 shows an SEM image of a ternary cathode material of Example 1.
FIG. 4 is a graph showing high-temperature cycling performance of ternary cathode materials of Examples 1 to 2 and Comparative Examples 1 to 2.

### DETAILED DESCRIPTION

The present application will now be described in detail with reference to the accompanying drawings in order to facilitate understanding of the present application. The drawings show some preferred embodiments of the present application. However, the present application may be implemented in many different forms and is not limited to the embodiments described herein. In contrast, the specific embodiments provided herein are only for understanding the disclosure of the present application more thorough and comprehensive.

For simplicity, the present application merely explicitly discloses certain numerical ranges. However, any lower limit can be combined with any upper limit to form a range not explicitly recited. Any lower limit can be combined with any other lower limit to form a range not explicitly recited. Any upper limit can likewise be combined with any other upper limit to form a range not explicitly recited. In addition, although not explicitly recited, every point or individual value between the endpoints of a range is inclusive in the range. Thus, each point or individual value itself may serve as a lower limit or an upper limit to combine with any other point or individual value or with any other lower or upper limit to form a range not explicitly recited.

Unless otherwise indicated, all technical and scientific terms used herein have the same meaning as those normally understood by those of ordinary skilled in the art. The terms used herein in the specification of the present application are for the purpose of describing specific embodiments only and are not intended to limit the present application. It should be noted that, unless otherwise indicated, the term "and/or" as used herein includes any and all combinations of one or more relevant listed items. The "above" and "below" used before a number are inclusive of the number itself. The "more" in "one or more" means two or more.

The foregoing application contents of the present application are not intended to describe every disclosed embodiment or every implementation in this application. The following description more specifically illustrates exemplary embodiments. In many places throughout the present application, guidance is provided through a series of embodiments, which can be used in various combinations. In each example, the enumerations are representative only and should not be construed as exhaustive.

During the research, the inventors found that in deep charging and discharging of the secondary batteries adopting the ternary cathode materials containing nickel, cobalt, manganese etc., significant internal stress occurs in the ternary cathode materials due to the intercalation and deintercalation of active ions such as lithium ions, which leads to collapse in the internal structure of the ternary cathode material and reconstruction of the surface structure caused by the migration of oxygen atoms in the material. In order to solve the above technical issues, the conventional methods involve dry-doping of elements into the ternary materials, such as doping with a single nano-oxide or co-doping with multiple elements, which can improve the structural stability of the ternary material to a certain extent, thereby improving the cycling performance of the ternary material.

However, after further research, the inventors discovered that when co-doping with multiple elements by the conventional dry-doping methods, the multiple doping elements are distributed disorderedly in the internal structure of the obtained ternary material, making it difficult to fully exert the synergistic effect of different doping elements on improving the electrochemical properties of the ternary material. As a result, when the ternary material obtained by the conventional dry-doping methods is used as a cathode material of the secondary battery, the structural stability and cycling performance of the secondary battery are not significantly improved. The inventors further discovered in the research process that this issue is mainly due to the conventional doping methods usually being solid-phase methods, by which most doping elements cannot diffuse into the interior crystal lattice of the ternary material during the high-temperature treatments. Instead, they are merely distributed randomly in the surface layer and the surface of the ternary material. As such, the improvement in the crystal structure of the ternary material due to the element doping is not evident. Thus, the improvement of the structural stability and cycling performance of the secondary battery is not prominently observed. To address the aforementioned technical issues, the inventors proposed the following technical solution.

An embodiment of the present application provides a ternary cathode material. The ternary cathode material includes a ternary cathode material matrix including a doped region. The doped region includes an aluminum-rich doped region distributed within a bulk phase of the ternary cathode material matrix, and a titanium-rich doped region distributed in a surface layer of the ternary cathode material matrix.

The ternary cathode material provided in the present application includes an aluminum-rich doped region formed within the bulk phase and a titanium-rich doped region formed in the surface layer. That is, in the doped ternary cathode material, the interior of the bulk phase has a high concentration of Al elements, and the surface layer has a high concentration of Ti elements. The Al elements provided by the aluminum-rich doped region within the bulk phase of the ternary cathode material form Al-O bonds with strong bonding energy in the bulk phase. These bonds effectively stabilize the lattice structure of the ternary cathode material during the deep charge-discharge cycles in the secondary battery, inhibiting the structural collapse during cycling, and improving the stability of the crystal structure of the ternary cathode material. Thus, the structural stability and cycling performance of the secondary battery can be effectively improved.

In addition, the Ti elements provided by the titanium-rich doped region in the surface layer of the ternary cathode material can form Ti⁴⁺/Ti³⁺ redox couples, which increase the charge carrier concentration and effectively improve the electronic/ionic conductivity of the micro-region at the surface of the ternary cathode material, thereby improving the rate performance of the ternary cathode material and the secondary battery. Moreover, the Ti elements provided by the titanium-rich doped region in the surface layer of the ternary cathode material can form Ti-O bonds, which reduce the activity of oxygen atoms in the surface layer, inhibit the reconstruction of surface structure caused by the migration of oxygen atoms, and inhibit the distortion of crystal lattice in the surface layer, thereby further improving the structural stability of crystal lattice of the ternary cathode material, and improving the structural stability and cycling performance of the secondary battery.

In some embodiments, the ternary cathode material matrix further includes a transitional region located between the aluminum-rich doped region and the titanium-rich doped region. A Li-Ti-Al-O eutectic structure is distributed in the transitional region.

In some embodiments, the mass percentage of the Al elements in the aluminum-rich doped region is greater than that in other regions, such as the titanium-rich doped region and the transitional region, of the ternary cathode material; the mass percentage of the Ti elements in the titanium-rich doped region is greater than that in other regions, such as the aluminum-rich doped region and the transitional region, of the ternary cathode material.

In some embodiments, the mass percentage of the Al elements in the aluminum-rich doped region is in a range of 0.01% to 10%, based on the total mass of the ternary cathode material.

In the embodiments of the present application, the mass percentage of the Al elements in the aluminum-rich doped region is controlled in an appropriate range, which facilitates the Al elements to form Al-O bonds with strong bonding energy in the bulk phase, effectively stabilizes the lattice structure of the ternary cathode material during the deep charging and discharging of the secondary battery, inhibits the structural collapse during the cycling, and improves the stability of the crystal structure of the ternary cathode material.

In some embodiments, based on the total mass of the ternary cathode material, the mass percentage of the Tielements in the aluminum-rich doped region can be 0.1%, 0.5%, 1%, 2%, 3%, 4%, 5%, 6%, 7%, 8%, 9%, or within a range constituted by any of the above values.

In some embodiments, based on the total mass of the ternary cathode material, the mass percentage of the Alelements in the titanium-rich doped region can be in a range of 0.01% to 10%. For example, the mass percentage of the Al elements can be 0.1%, 0.5%, 1%, 2%, 3%, 4%, 5%, 6%, 7%, 8%, 9%, or within a range constituted by any of the above values.

In the embodiments of the present application, the mass percentage of the Ti elements in the titanium-rich doped region is controlled within an appropriate range, which facilitates the Ti elements to form Ti-O bonds in the surface layer of the ternary cathode material, thereby reducing the activity of oxygen atoms in the surface layer, inhibiting the reconstruction of the surface structure caused by the migration of oxygen atoms, inhibiting the distortion of crystal lattice in the surface layer, and further improving the structural stability of crystal lattice of the ternary cathode material.

In addition, the mass percentage of the Al elements in the aluminum-rich doped region and the mass percentage of the Ti elements in the titanium-rich doped region are controlled within appropriate ranges, which can further promote the synergistic effect of the Al elements and the Ti elements on improving the crystal structure of the ternary cathode material, and improving the structural stability and cycling performance of the secondary battery.

In some embodiments, the average particle size of the ternary cathode material particles can be in a range of 4 µm to 20 µm, for example, 6 µm, 8 µm, 10 µm, 12 µm, 14 µm, 18 µm, or within a range constituted by any of the above values. The average particle size of the ternary cathode material is controlled within the above range, which is beneficial to improve the structural stability and cycling performance of the secondary battery.

The meaning of the average particle size of the ternary cathode material particles is known in the art, and the average particle size can be measured by using instruments and methods known in the art. For example, the average particle size can be conveniently determined by using a laser particle size analyzer, such as the Mastersizer 2000E laser particle size analyzer from Malvern Instruments Co., Ltd (the United Kingdom) according to the GB/T 19077-2016 particle size distribution laser diffraction method.

The ternary cathode material matrix can represented by a molecular formula of, for example, Li_{w}NiₓCo_{y}Mn_{1-x-y}O₂, wherein 0.95≤w≤1.05, 0.33≤x<0.95, 0.05<y≤0.77, and 0≤z<1. Optionally, w=1, and Li_{w}NiₓCo_{y}Mn_{1-x-y}O₂ is LiNiₓCo_{y}Mn_{1-x-y}O₂.

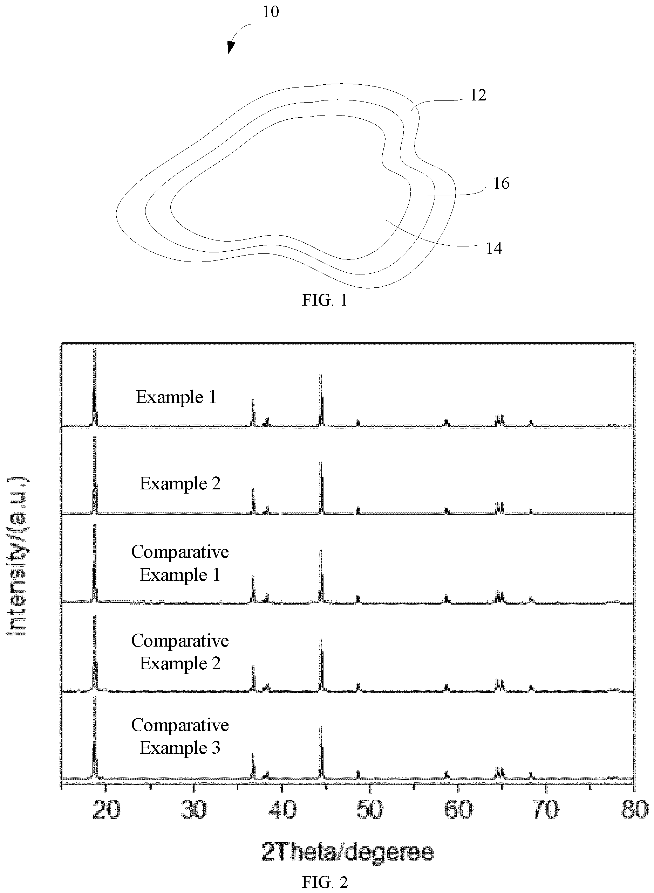

Referring to FIG. 1, FIG. 1 schematically shows an internal structure of a ternary cathode material particle 10 in an embodiment of the present application, in which the titanium-rich doped region is labeled by 12, the aluminum-rich doped region is labeled by 14, and the transitional region is labeled by 16. The aluminum-rich doped region 14 is the core and is covered by the titanium-rich doped region 12. The transitional region 16 is formed between the aluminum-rich doped region 14 and the titanium-rich doped region 12.

An embodiment of the present application further provides a method for preparing a ternary cathode material. The method includes the following steps:
S10, providing a ternary cathode precursor and a MAX compound dopant-containing sol, wherein the dopant is a compound represented by M-A-X (hereinafter referred to as the MAX compound), wherein M includes Ti, A includes Al, and X includes C or N;
S20, mixing the ternary cathode precursor, the MAX compound dopant-containing sol, and a lithium salt together to obtain a pre-doped material; and
S30, sintering the pre-doped material multiple times to form a doped region in the ternary cathode material matrix, wherein the doped region includes an aluminum-rich doped region distributed in a bulk phase of the ternary cathode material matrix and a titanium-rich doped region distributed in a surface layer of the ternary cathode material matrix.

In the method for preparing the ternary cathode material provided in embodiments of the present application, the MAX compound serves as a dopant in the form of a sol to perform liquid-phase mixed doping to the ternary cathode precursor (i.e., a wet-doping method). In some embodiments, the MAX compound has a layered crystal structure, in which elements M and X form a layered structure, and elements A as an intercalating agent are intercalated into the layered structure formed by the elements M and X. The elements A have a relatively high activity, and are similar to the ternary cathode material in characteristics. Therefore, gradient doping can be achieved based on the different activities between M and A. Moreover, the MAX compound has good electronic conductivity and high mechanical strength, and thus can exhibit a good effect as a dopant. The gradient doping of M and A can improve the structural stability of the ternary material due to the formation of an ultra-stable structure region and inhibit the cracks and structural deterioration of the crystal particles. Meanwhile, the liquid-phase mixed doping can increase the coating contact area of the dopant on the ternary cathode precursor, making it easier for the doping elements to enter into the crystal lattice of the ternary material during the subsequent sintering process, and the liquid-phase mixed doping can promote orderly distribution of the dopant in the crystal lattice of the ternary material, forming doping element-oxygen atom bonds with strong bonding energy in the crystal lattice, thereby effectively inhibiting the structural collapse caused by the deintercalation of lithium ions during the cycling, and improving the stability of the crystal structure of the ternary cathode material and the structural stability of the secondary battery.

In addition, the multiple sintering processes allow gradient doping of elements, which enables the MAX compound to decompose into different doping elements at different sintering stages, and facilitates the different doping elements to have enough time to occupy metal vacancies within the crystal lattice of the ternary material, thereby realizing the doping in the interior of the bulk phase and the surface layer of the ternary cathode material, and thus forming a gradient doping distribution including a transition from the aluminum-rich doped region within the bulk phase to the titanium-rich doped region in the surface layer. These doped regions can effectively stabilize the lattice structure of the ternary cathode material during the cycling, and fully exert the synergistic effect of the different doping elements on improving the electrochemical properties of the ternary cathode material. A transitional region can be formed between the aluminum-rich doped region and the titanium-rich doped region, and a Li-Ti-Al-O eutectic structure is formed in the transitional region. The eutectic system formed by Al and Ti can simultaneously exert stabilizing effects of both Al and Ti elements on the structure of the ternary cathode material, forming a "super-stable transitional region", which can well absorb the stress generated in the material during the cycling, providing a basis for a stable structure, and inhibiting the distortion of the crystal lattice, thereby effectively improving the cycling performance of the secondary battery.

In some embodiments, in step S10, the providing the dopant-containing sol includes the following steps:
S100, making the MAX compound particles contact with a dispersant in deionized water, and mixing the MAX compound particles with the dispersant in the deionized water to obtain a mixture solution; and
S110, ball-milling the mixture solution to achieve an average particle size of 20 nm to 200 nm for the MAX compound particles, thereby obtaining the dopant-containing sol.

In some embodiments, the MAX compound is represented by a molecular formula of TiₘAlCₙ, wherein 0<m<5 and 0<n<5. In some embodiments, the MAX compound is represented by a molecular formula of Tiₙ₊₁AlCₙ, wherein n is 1, 2, or 3. In some embodiments, the MAX compound is represented by a molecular formula of Ti₃AlC₂.

In some embodiments, the type of the dispersant is not specifically limited and can be selected according to actual needs. For example, the dispersant can include one or more of hexadecyltrimethylammonium chloride, dodecyltrimethylammonium chloride, hexadecylpyridinium chloride, sodium benzenesulfonate, lauroyl glutamic acid, or diethanolamide.

In some embodiments, the mass ratio of the MAX compound particles to the dispersant is in a range of 1:0.01 to 1:1.5. For example, the mass ratio of the MAX compound particles to the dispersant can be 1:0.05, 1:0.10, 1:0.30, 1:0.50, 1:0.80, 1:1.10, 1: 1.30, or within a range constituted by any of the above values.

In some embodiments, the dopant-containing sol has a solid content (i.e., the mass percentage of the MAX compound in the sol) is in a range of 5% to 50%. For example, the solid content can be 0%, 15%, 20%, 25%, 30%, 35%, 40%, 45%, or within a range constituted by any of the above values. The solid content is controlled within an appropriate range, which is beneficial for improving the utilization rate of the MAX compound-containing dopant and avoiding excess aggregation and precipitation.

Specifically, if the solid content obtained by mixing the MAX compound particles with the deionized water and the dispersant is exactly within the range between 5% and 50%, there is no need for water evaporation. However, if a more dilute mixture solution is obtained, or if a sol with a target solid content is to be obtained, the mixture solution can be placed in a rotary evaporator to evaporate the solvent at a temperature not exceeding 50°C to obtain a sol with the target solid content.

In some embodiments, the ternary cathode precursor includes nickel, cobalt, and manganese elements, which includes but not limited to one or more of hydrated oxides, hydroxides, chlorides, carboxylates, acetates, or carbonates of divalent nickel, cobalt, and manganese.

In some embodiments, the ternary cathode precursor in step S10 can be prepared by as follows.

Cobalt sulfate, manganese sulfate, and nickel sulfate are added to 2 mol/L of an ammonia aqueous solution to formulate a base solution, and sodium hydroxide is introduced into the base solution through a peristaltic pump to conduct a precipitation reaction, while introducing an ammonia aqueous solution to control the pH value of the solution and monitoring the reaction temperature with a thermometer. Once the reaction is completed, the product is washed, dried, and sieved to remove iron, thereby obtaining the ternary cathode precursor.

In some embodiments, in step S20, the mixing the ternary cathode precursor, the dopant-containing sol, and the lithium salt together includes the following steps:
S200, making the ternary cathode precursor contact with the dopant-containing sol, and mixing the ternary cathode precursor with the dopant-containing sol to obtain a mixture; and
S210, drying the mixture and then mixing with the lithium salt, thereby obtaining the pre-doped material.

In some embodiments, the ternary cathode precursor is represented by a molecular formula of NiₓCo_{y}Mn_{1-x-y}(OH)₂, wherein 0.33<x<0.95, 0.05<y<0.77.

In some embodiments, the ternary cathode precursor particles have an average particle size of 4 µm to 20 µm. For example, the average particle size can be 6 µm, 8 µm, 10 µm, 12 µm, 14 µm, 18 µm, or within a range constituted by any of the above values. The average particle size of the ternary cathode precursor particles is within the above range, which is beneficial to subsequent doping and sintering processes, and beneficial to obtaining a ternary cathode material having relatively good structural stability and cycling performance.

The meaning of the average particle size of the ternary cathode material particles is known in the art, and the average particle size can be measured by using instruments and methods known in the art. For example, the average particle size can be conveniently determined by using a laser particle size analyzer, such as the Mastersizer 2000E laser particle size analyzer from Malvern Instruments Co., Ltd (the United Kingdom) according to the GB/T 19077-2016 particle size distribution laser diffraction method.

In some embodiments, the mass ratio of the ternary cathode precursor to the MAX compound is in a range of 1:0.0005 to 1:0.05. For example, the mass ratio of the ternary cathode precursor to the MAX compound can be 1:0.001, 1:0.005, 1:0.01, 1:0.05, or in a range constituted of any of the above values. The mass ratio of the ternary cathode precursor to the MAX compound is controlled within the appropriate range, which is beneficial to the subsequent orderly doping of elements.

In some embodiments, the molar ratio of the lithium elements in the lithium salt to a total amount of transition metal elements in the ternary cathode precursor is in a range of 1.0: 1 to 1.1:1.

In some embodiments, the type of the lithium salt is not specifically limited and can be selected according to actual needs. For example, the lithium salt can include one or more of lithium carbonate, lithium hydroxide, lithium nitrate, lithium acetate or lithium chloride.

In some embodiments, the drying method in step S210 is not specifically limited and can be selected according to actual needs. For example, the drying method can be oven drying, natural drying, spray drying, etc. In some embodiments, the drying method is spray drying.

In some embodiments, in step S30, the sintering the pre-doped material multiple times includes: performing a first sintering under a first condition; and performing a second sintering under a second condition. The first condition includes a lower sintering temperature and a shorter sintering time. The second condition includes a higher sintering temperature and a longer sintering time.

In some embodiments, in step S30, the sintering the pre-doped material the plurality of times includes the following steps:
S300, performing a first sintering to the pre-doped material at a temperature of 400°C to 500°C for 3 hours to 5 hours to obtain a first sintered material; and
S310, performing a second sintering to the first sintered material at a temperature of 700°C to 1000°C for 10 hours to 20 hours to obtain the ternary cathode material.

The gradient doping of elements can be formed in the ternary cathode material by sintering the pre-doped material multiple times according to the steps S300 and S310, and optionally controlling the temperature raising rates in the multiple sintering processes.

In some embodiments, the first sintering is firstly performed in step S300. That is, the sintering is firstly performed at a low-temperature stage. The temperature of the first sintering needs to be controlled within the range of 400°C to 500°C, such as 450°C to 500°C, specifically for example 450°C. The time period of the first sintering needs to be controlled within 3 hours to 5 hours, such as 3.5 hours to 4.5 hours, specifically for example 3.5 hours, 4 hours, 4.5 hours, or within a range constituted of any of the above values. In some embodiments, the temperature raising rate in step S300 is less than or equal to 3°C/min.

During the low-temperature sintering, the temperature, time period, and temperature raising rate are all controlled within appropriate ranges, through the coordination involving temperature and time period, and optionally temperature raising rate, the Al elements with a relatively high activity in the MAX compound can migrate to the surface and form Al₂O₃. As the temperature rises, the Al elements gradually diffuse and migrate into the bulk phase of the ternary material, achieving the doping of the Al elements within the bulk phase of the ternary material, and forming the aluminum-rich doped region within the bulk phase.

In some embodiments, the second sintering is performed in step S310. That is, the sintering is then performed at a high-temperature stage. The temperature of the second sintering needs to be controlled within the range of 700°C to 1000°C, such as 750°C to 950°C, specifically for example 750°C, 800°C, 850°C, 900°C, 950°C, or within a range constituted by any of the above values. The time period of the second sintering needs to be controlled within the range of 10 hours to 20 hours, such as 12 hours to 18 hours, specifically for example 12 hours, 14 hours, 16 hours, 18 hours, or within a range constituted by any of the above values. In some embodiments, the temperature raising rate in step S310 is less than or equal to 5°C/min. The temperature raising rate for the first sintering is less than the temperature raising rate for the second sintering.

During the high-temperature sintering, the temperature, time period, and temperature raising rate are all controlled within appropriate ranges, through the coordination involving temperature, time period, and temperature raising rate, the MAX compound can be decomposed completely to form TiO₂, and the surface layer of the ternary material can be doped with the Ti elements.

In some embodiments, the sintering atmosphere of the first sintering and the second sintering are not particularly limited and can be selected according to actual needs. For example, the sintering atmosphere can be air, oxygen gas, or a mixture of air and oxygen gas.

Therefore, the multiple sintering processes allow gradient doping of elements, which enables the MAX compound to decompose into different doping elements at different sintering stages, and facilitates the specific doping elements to have enough time to occupy transition metal vacancies in the crystal lattice of the ternary material, thereby realizing the doping in the interior of the bulk phase and the surface layer of the ternary cathode material. In the low-temperature stage, the Al elements with a high activity firstly enter into the crystal lattice of the ternary material to occupy the metal vacancies, realizing the doping within the bulk phase, and ensuring the presence of an aluminum-rich doped structure in the interior of the material. In the high-temperature stage, the Ti elements entering the bulk phase are able to occupy metal vacancies. However, since most of the metal vacancies have already been occupied by the Al elements, the Ti elements formed from the decomposition in the high-temperature stage more tend to dope the surface layer (5 nm to 500 nm). The gradient doping of Al and Ti is achieved based on the characteristics of the MAX compound. The gradient doping is an orderly distribution pattern transitioning from the aluminum-rich doped region within the bulk phase to the titanium-rich doped region in the surface layer. These doped regions can effectively stabilize the lattice structure of the ternary cathode material during the cycling, and fully exert the synergistic effect of the different doping elements on improving the electrochemical properties of the ternary cathode material, thereby effectively improving the cycling performance of the secondary battery.

In a third aspect, an embodiment of the present application provides a cathode plate. The cathode plate includes the ternary cathode material provided in the first aspect of the present application, or the ternary cathode material prepared by the method provided in the second aspect of the present application.

In some embodiments, the cathode plate includes a cathode electrode current collector, and a cathode electrode film disposed on at least one surface of the cathode electrode current collector. The cathode electrode film includes the ternary cathode material in the second aspect of the present application.

As an example, the cathode electrode current collector has two opposing surfaces in the thickness direction. The cathode electrode film is disposed on either one or both of the two opposing surfaces of the cathode electrode current collector.

In some embodiments, the cathode electrode current collector can be a metal foil or a composite current collector. For example, an aluminum foil can be used as the metal foil. The composite current collector can include a polymer material substrate layer and a metal layer formed on at least one surface of the polymer material substrate layer. The composite current collector can be prepared by forming metal materials (such as aluminum, aluminum alloys, nickel, nickel alloys, titanium, titanium alloys, silver, silver alloys, etc.) on the polymer material substrate (such as polypropylene (PP), polyethylene terephthalate (PET), polybutylene terephthalate (PBT), polystyrene (PS), polyethylene (PE), etc.).

In some embodiments, the cathode electrode film optionally further includes a binder. As an example, the binder can include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resin.

In some embodiments, the cathode electrode film optionally further includes a conductive agent. As an example, the conductive agent can include at least one of superconducting carbon, acetylene black, carbon black, Ketjen black, carbon dots, carbon nanotubes, graphene, or carbon nanofibers.

In some embodiments, the cathode plate can be prepared by following steps: dispersing the aforementioned components, such as the ternary cathode material, the conductive agent, the binder, and any other components for preparing the cathode plate in a solvent (such as N-methyl pyrrolidone) to form a cathode electrode slurry; coating the cathode electrode slurry on a cathode electrode current collector; and performing drying, cold pressing and the like, thereby obtaining the cathode plate.

In a fourth aspect, an embodiment of the present application provides a secondary battery. The secondary battery includes the cathode plate provided in the third aspect of the present application.

In some embodiments, the type of the secondary battery is not specifically limited and can include any battery in which an electrochemical reaction occurs to convert chemical energy into electrical energy. For example, the secondary battery can be a lithium-ion battery or a sodium-ion battery.

In some embodiments, the secondary battery further includes an anode electrode plate, an electrolyte, and a separator. During the charging and discharging of the secondary battery, active ions are intercalated and deintercalated repeatedly between the cathode plate and the anode electrode plate. The electrolyte conducts ions between the cathode plate and the anode electrode plate. The separator is disposed between the cathode plate and the anode electrode plate, and is mainly for preventing the cathode electrode and anode electrode from short-circuiting while allowing ions to pass through.

In a fifth aspect, an embodiment of the present application provides an electronic device. The electronic device includes the secondary battery provided in the fourth aspect of the present application. The secondary battery can be used as a power source in the electronic device.

In some embodiments, the type of the electronic device is not particularly limited and can be any known electronic device used in the art. For example, the electronic device can include but not limited to, a notebook computer, a pen computer, a mobile computer, an e-book player, a portable telephone, a portable fax machine, a portable copier, a portable printer, a stereo headset, a video recorder, a liquid crystal display television, a portable cleaner, a portable CD player, a mini compact disc, a transceiver, an electronic notepad, a calculator, a memory card, a portable recorder, a radio, a backup power supply, a motor, a car, a motorcycle, a power-assisted bicycle, a bicycle, a lighting equipment, a toy, a game console, a clock, an electric power tool, a flashlight, a camera, a large household storage battery, a lithium-ion capacitor, etc.

### Examples

Specific examples are set forth below and further specifically describe the content disclosed in the present application. These examples are only used for illustrative purpose, as various modifications and variations within the scope of the disclosure of the present application will be apparent to those skilled in the art. Unless otherwise stated, all parts, percentages, and ratios recited in the following examples are based on weight. Reagents used in the examples are all commercially available or synthesized according to conventional methods, which can be directly used without further treatment. The equipment used in the examples is all commercially available.

### Example 1

(1) 200 g of Ti₃AlC₂ with an average particle size of 10 µm, 20 g of hexadecyltrimethylammonium chloride, and 1000 g of deionized water were added into a ball mill tank, and then 200 g of zirconium balls were added. The mixture was ground at 2000 rpm/min for 10 hours, and subjected to ultrasonic treatment for 1 hour, thereby obtaining a dopant (Ti₃AlC₂)-containing sol with an average particle size of 20 nm and a solid content of 20%.
(2) 25 kg of Ni_{0.6}Co_{0.1}Mn_{0.3}(OH)₂ with an average particle size of 4.0 µm was added into the sol obtained in step (1). The mixture was stirred for 1 hour, and then subjected to spray drying and granulation to obtain a precursor material. The precursor material and lithium hydroxide were uniformly mixed at a molar ratio of Li/(Ni+Co+Mn) of 1.1:1, thereby obtaining a pre-doped material.
(3) The pre-doped material was sintered in multiple stages under oxygen atmosphere in a box-type furnace. In the low-temperature stage, the sintering temperature is 450°C, the sintering time is 3 hours, and the temperature raising rate is 3°C/min. In the high-temperature stage, the sintering temperature is 930°C, the sintering time is 11 hours, and the temperature raising rate is 5°C/min. After jaw crushing, roller grinding, and airflow pulverization, a ternary cathode material gradient-doped with Al and Ti elements (LiNi_{0.6}Co_{0.1}Mn_{0.23}Al_{0.05}Ti_{0.02}O₂) was obtained.

### Example 2

(1) 200 g of Ti₃AlC₂ with an average particle size of 20 µm, 15 g of hexadecyltrimethylammonium chloride, and 500 g of deionized water were added into a ball mill tank, and then 200 g of zirconium balls were added. The mixture was ground at 2000 rpm/min for 3 hours, and subjected to ultrasonic treatment for 1 hour, thereby obtaining a dopant (Ti₃AlC₂)-containing sol with an average particle size of 200 nm and a solid content of 40%.
(2) 25 kg of Ni_{0.6}Co_{0.1}Mn_{0.3}(OH)₂ with an average particle size of 4.0 µm was added into the sol obtained in step (1). The mixture was stirred for 1 hour, and then subjected to spray drying and granulation to obtain a precursor material. The precursor material and lithium hydroxide were uniformly mixed at a molar ratio of Li/(Ni+Co+Mn) of 1.03:1, thereby obtaining a pre-doped material.
(3) The pre-doped material was sintered in multiple stages under oxygen atmosphere in a box-type furnace. In the low-temperature stage, the sintering temperature is 450°C, the sintering time is 3 hours, and the temperature raising rate is 3°C/min. In the high-temperature stage, the sintering temperature is 930°C, the sintering time is 11 hours, and the temperature raising rate is 5°C/min. After jaw crushing, roller grinding and airflow pulverization, a ternary cathode material gradient-doped with Al and Ti elements (LiNi_{0.6}Co_{0.1}Mn_{0.23}Al_{0.05}Ti_{0.02}O₂) was obtained.

### Example 3

(1) 200 g of Ti₃AlC₂ with an average particle size of 20 µm, 15 g of hexadecyl trimethylammoniumchloride, and 400 g of deionized water were added into the ball mill tank, and then 200 g of zirconium balls were added. The mixture was ground at 2000 rpm/min for 3 hours, and subjected to ultrasonic treatment for 1 hour, thereby obtaining a dopant (Ti₃AlC₂)-containing sol with an average particle size of 200 nm and a solid content of 50%.
(2) 25 kg of Ni_{0.6}Co_{0.1}Mn_{0.3}(OH)₂ with an average particle size of 4.0 µm was added into the sol obtained in step (1). The mixture was stirred for 1 hour, and then subjected to spray drying and granulation to obtain a precursor material. The precursor material and lithium hydroxide were uniformly mixed at a molar ratio of Li/(Ni+Co+Mn) of 1.03:1, thereby obtaining a pre-doped material.
(3) The pre-doped material was sintered in multiple stages under oxygen atmosphere in the box-type furnace. In the low-temperature stage, the sintering temperature is 450°C, the sintering time is 3 hours, and the temperature raising rate is 3°C/min. In the high-temperature stage, the sintering temperature is 930°C, the sintering time is 11 hours, and the temperature raising rate is 5°C/min. After jaw crushing, roller grinding and airflow pulverization, a ternary cathode material gradient-doped with Al and Ti elements (LiNi_{0.6}Co_{0.1}Mn_{0.22}Al_{0.06}Ti_{0.02}O₂) was obtained.

### Comparative Example 1

The preparation method in Comparative Example 1 is similar to that in Example 1, except that the ternary cathode material is not doped. That is, 25 kg of Ni_{0.6}Co_{0.1}Mn_{0.3}(OH)₂ with an average particle size of 4.0 µm and lithium hydroxide were uniformly mixed at a molar ratio of Li/(Ni+Co+Mn) of 1.1:1, sintered under oxygen atmosphere in a box-type furnace under conditions including a temperature raising rate of 10°C/min, a sintering temperature of 930°C, and a sintering time of 11 hours, followed by jaw crushing, roller grinding, and airflow pulverization, thereby obtaining an undoped ternary cathode material (LiNi_{0.6}Co_{0.1}Mn_{0.3}O₂).

### Comparative Example 2

The preparation method in Comparative Example 2 is similar to that in Example 1, except that the ternary cathode material was doped with Al and Ti elements through a conventional dry-doping method. That is, 25 kg of Ni_{0.6}Co_{0.1}Mn_{0.3}(OH)₂ with an average particle size of 4.0 µm, 11.90 kg of lithium hydroxide (a molar ratio of Li/(Ni+Co+Mn) is 1.1:1), 120 g of aluminium oxide nanoparticles, and 100 g of titanium oxide nanoparticles were uniformly mixed. The mixture was sintered under oxygen atmosphere in a box-type furnace under conditions including a temperature raising rate of 10°C/min, a sintering temperature of 930°C, and a sintering time of 11 hours. After jaw crushing, roller grinding, and airflow pulverization, a ternary cathode material doped with Al and Ti elements (LiNi_{0.6}Co_{0.1}Mn_{0.23}Al_{0.05}Ti_{0.02}O₂) was obtained.

### Comparative Example 3

The preparation method in Comparative Example 3 is similar to that in Example 1, except that the ternary cathode material was doped with Al elements through a conventional dry-doping method. That is, 25 kg of Ni_{0.6}Co_{0.1}Mn_{0.3}(OH)₂ with an average particle size of 4.0 µm, 1190 kg of lithium hydroxide (a molar ratio of Li/(Ni+Co+Mn) is 1.1:1), and 120 g of aluminium oxide nanoparticles were uniformly mixed. The mixture was sintered under oxygen atmosphere in a box-type furnace under conditions including a temperature raising rate of 10°C/min, a sintering temperature of 930°C, and a sintering time of 11 hours. After jaw crushing, roller grinding, and airflow pulverization, a ternary cathode material doped with Al element (LiNi_{0.6}Co_{0.1}Mn_{0.25}Al_{0.05}O₂) was obtained.

### Comparative example 4

The preparation method in Comparative Example 4 is similar to that in Example 1, except that the pre-doped material was only sintered once in step (3). That is, the temperature of the pre-doped material was directly raised to 930°C at a temperature raising rate of 10°C/min, and the pre-doped material was sintered at this temperature for 11 hours under oxygen atmosphere in a box-type furnace.

The ternary cathode materials obtained in Examples 1 to 3 and Comparative Examples 1 to 4, or correspondingly prepared lithium-ion batteries were tested for relevant performances. The test results are shown in Tables 1 and 2 below.

Therein, the test conditions or test standards for specific performance tests are as follows.
(1) X-ray powder diffraction (XRD) of the ternary cathode material
   Ternary cathode material powder was placed on a sample stage of the XRD testing instrument (Model: Bruker D8), and scanned at a scanning rate of 2°/min and a scanning angle ranging from 10° to 90°, to obtain a XRD diffraction pattern as shown in FIG. 1.
(2) Scanning electron microscopy (SEM) of the ternary cathode material
   The morphology of the ternary cathode material was observed with the ZEISS sigma 300 scanning electron microscope according to standard JY/T010-1996, obtaining a morphology image as shown in FIG. 2.
(3) Distribution test of doped elements in the ternary cathode material
   The ternary cathode materials obtained in Examples 1 and 2 and Comparative Examples 1 to 3 were charged and discharged 50 cycles at a voltage of 2.8-4.4 V and a rate of 0.5C/1C, and then their XRD patterns were obtained. The comparison graph was drawn and shown in FIG. 1. The XRD data of the samples in Example 1 and Comparative Examples 1 to 3 were refined, and the refinement data were as shown in Table 1 below. The refinement of XRD refers to refine the XRD data by using the Rietveld refinement method.
(4) Rate performance test of the lithium-ion battery
   The obtained ternary cathode materials were assembled into button-cell batteries. The mass ratio of the ternary cathode material to the conductive carbon black was 90 wt%:10 wt%. The solvent was N-methyl pyrrolidone (NMP). The surface density of the electrode plate of the battery was 1.2 mg/cm². At a temperature of 25°C and between voltages of 2.8 V and 4.4 V, the batteries were charged and discharged for 1 cycle at a rate of 0.1C/0.1C, and charged and discharged at rates of 0.1 C/1C, 0.2C/1C, 0.5C/2C, and 1C/1C, and then, for the test, charged and discharged for 50 cycles at a rate of 1C/1C.
(5) High-temperature cycling performance test of the lithium-ion battery

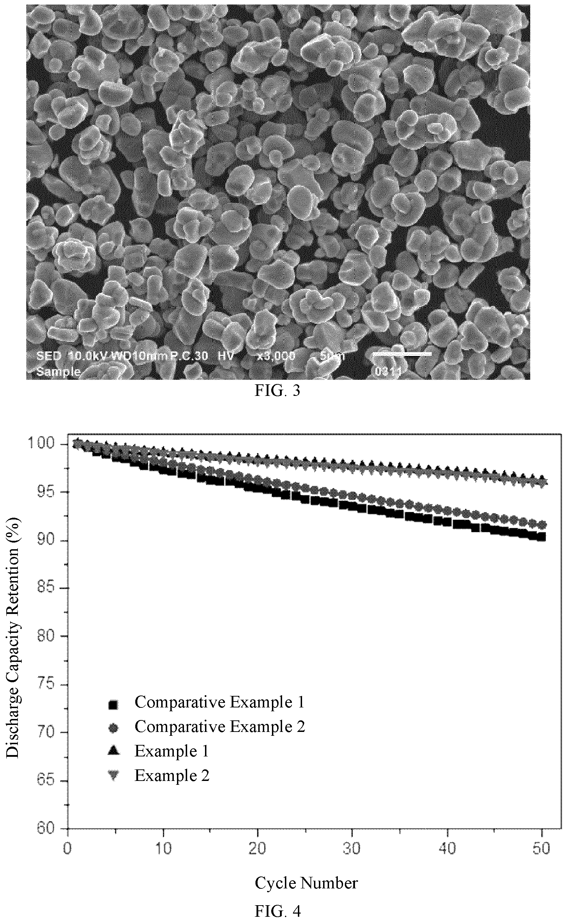

The lithium-ion batteries were charged at 55°C with a constant current of 1 C to 4.4 V, then charged with a constant voltage until the current reaches 0.05 C, left standing for 5 minutes, and then discharged with a constant current of 1 C to 2.5 V This procedure formed one charge-discharge cycle. The discharge capacity of the first cycle was recorded as D01. The lithium-ion batteries were charged and discharged for 50 cycles according to the above procedure, and the discharge capacity of the 50th cycle was recorded as D1. A comparison graph of the charging and discharging cycling procedures was drawn, thereby obtaining the graph of curves of capacity retention rate versus cycle of the lithium-ion batteries as shown in FIG. 3.

**Table 1**

| Group | I_{003/104} | c/Å | a/Å | c/a | V/Å³ |
|---|---|---|---|---|---|
| Comparative Example 1 | 1.405 | 14.241 | 2.872 | 4.956 | 102.13 |
| Comparative Example 2 | 1.457 | 14.249 | 2.873 | 4.960 | 102.46 |
| Comparative Example 3 | 1.489 | 14.244 | 2.874 | 4.959 | 102.48 |
| Example 1 | 1.562 | 14.289 | 2.875 | 4.970 | 102.98 |

**Table 2**

| Group | 0.1C Charge capacity (mAh/g) | Efficienc y (%) | 0.1C Discharge capacity (mAh/g) | 25°C, Capacity retention rate at 50th cycle (%) | 45°C, Capacity retention rate at 50th cycle (%) | 0.5C charge capacity (mAh/g) | 1C Charge capacity (mAh/g) | 2C Charge capacity (mAh/g) |
|---|---|---|---|---|---|---|---|---|
| Example 1 | 215.6 | 88.89 | 191.6 | 97.19 | 95.51 | 181.6 | 175.2 | 171.9 |
| Example 2 | 215.5 | 88.79 | 191.3 | 97.33 | 95.25 | 181.3 | 175.1 | 171.6 |
| Example 3 | 215.9 | 88.84 | 191.8 | 97.11 | 95.42 | 181.1 | 175.0 | 171.5 |
| Comparative Example 1 | 213.0 | 88.21 | 187.8 | 90.12 | 88.38 | 176.2 | 170.2 | 163.7 |
| Comparative Example 2 | 214.2 | 88.40 | 189.0 | 94.33 | 92.55 | 178.2 | 173.2 | 167.5 |
| Comparative Example 3 | 214.0 | 88.33 | 188.5 | 93.28 | 91.49 | 177.8 | 172.8 | 166.7 |
| Comparative Example 4 | 213.5 | 88.25 | 189.5 | 94.92 | 93.05 | 179.9 | 173.5 | 168.2 |

It can be seen from FIG. 1 that no impurity peak can be observed for the samples prepared according to the methods in Examples 1 to 2 and Comparative Examples 1 to 3 after 50 cycles, which indicates that the crystal structure of the materials is not changed after being doped with Al and Ti, and the materials exhibit good structural stability, without structural change.

Table 1 shows the XRD refinement results of the samples of Example 1 and Comparative Examples 1 to 3. It can be seen from the table that, after 50 cycles between the voltages of 2.8V to 4.4V at the rate of 0.5C/1C, the ternary cathode material of Example 1 exhibits greater I_{003/104} value, greater crystal unit cell parameters (c, a, c/a) and greater crystal unit cell volume (V) as compared with those of Comparative Examples 2 to 4, which are conducive to the diffusion of Li⁺ in the bulk phase, and can decrease the direct-current resistance (DCR) in the cycling. This is due to that the Al and Ti elements replace the transition metal vacancies, and the bonding energies of the Al-O bonds and the Ti-O bonds are higher than that of the bonds of Ni/Co/Mn and O, which is beneficial to enhancing the stability of the layered structure and inhibiting the formation of a rock-salt phase. On the other hand, the coating can stabilize the interface between the electrode and the electrolyte, inhibiting the reaction between Ni⁴⁺ and the electrolyte, alleviating the corrosion of the cathode material by hydrofluoric acid (HF) in the electrolyte, and inhibiting the formation of oxygen vacancies.

By comparing Examples 1, 2 and 3 to Comparative Example 2 in Table 1, it can be seen that the ternary cathode materials gradient-doped with Al and Ti elements prepared by the method of the present application have higher charge and discharge capacities, higher initial efficiency, and higher cycling performance, as compared with the ternary cathode material prepared by the conventional dry-doping method in Comparative Example 2, indicating that the gradient doping of elements can indeed improve the stability of the crystal structure of the materials and effectively improve the structural stability and cycling performance of the secondary batteries.

By comparing Examples 1 and 2 to Comparative Example 4, it can be seen that the ternary cathode materials of the present application obtained by the multiple-stage sintering have higher charge and discharge capacities, higher initial efficiency, and higher cycling performance, as compared with the ternary cathode material prepared by one-step sintering in Comparative Example 4, indicating that the multiple-stage sintering is indeed conducive to forming a doped region in the ternary cathode materials, improving the stability of the crystal structure of the materials, thereby effectively improving the structural stability and cycling performance of the secondary batteries.

In Table 2, as compared with Comparative Examples 1 to 4, the ternary cathode materials in Examples 1 to 3 have higher charge capacities at 0.5 C, 1C, and 2C, which indicates that the preparation method provided in the present application can effectively improve the rate performance of the ternary cathode materials.

As can be seen from FIG. 1, no impurity peak appears of the samples of Examples 1 to 2 and Comparative Examples 1 to 3, which indicates that the gradient doping of elements does not change the crystal structure of the ternary cathode materials. Meanwhile, the 003/104 peak intensity ratios for the samples are all greater than 1.2, which indicates that the ternary cathode materials have relatively low Li/Ni mixed arrangement values.

It can be seen from FIG. 3 that the ternary cathode materials prepared by the method of the present application have better high-temperature cycling performance as compared with Comparative Examples 1 and 2, which indicates that the preparation method provided in the present application can improve the cycling performance of lithium-ion batteries, and the present preparation method is significantly better than the conventional dry-doping method.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A ternary cathode material, comprising a ternary cathode material matrix, wherein the ternary cathode material matrix comprises a doped region, and the doped region comprises:
an aluminum-rich doped region distributed within a bulk phase of the ternary cathode material matrix; and
a titanium-rich doped region distributed in a surface layer of the ternary cathode material matrix.

2. The ternary cathode material according to claim 1, wherein the ternary cathode material matrix further comprises a transitional region located between the aluminum-rich doped region and the titanium-rich doped region, and the transitional region comprises a Li-Ti-Al-O eutectic structure distributed therein.

3. The ternary cathode material according to claim 1 or 2, which satisfies at least one of conditions (1) to (3):
(1) the average particle size of ternary cathode material particles is in a range of 4 µm to 20 µm;
(2) the mass percentage of aluminum elements in the aluminum-rich doped region is in a range of 0.01% to 10%, based on the total mass of the ternary cathode material;
(3) the mass percentage of titanium elements in the titanium-rich doped region is in a range of 0.01% to 10%, based on the total mass of the ternary cathode material.

4. The ternary cathode material according to any one of claims 1 to 3, wherein the ternary cathode material matrix is represented by a molecular formula of Li_{w}NiₓCo_{y}Mn_{1-x-y}O₂, wherein 0.95≤w≤1.05, 0.33≤x<0.95, 0.05<y≤0.77, and 0≤z<1;
preferably, w=1, and Li_{w}NiₓCo_{y}Mn_{1-x-y}O₂ is LiNiₓCo_{y}Mn_{1-x-y}O₂.

5. A method for preparing a ternary cathode material, comprising
providing a ternary cathode precursor and a dopant-containing sol, wherein the dopant contains a compound represented by M-A-X, and M comprises Ti, A comprises Al, and X comprises C or N;
mixing the ternary cathode precursor, the dopant-containing sol, and a lithium salt together to obtain a pre-doped material; and
sintering the pre-doped material multiple times to form a doped region in the ternary cathode material matrix, wherein the doped region comprises an aluminum-rich doped region distributed within a bulk phase of the ternary cathode material matrix and a titanium-rich doped region distributed in a surface layer of the ternary cathode material matrix.

6. The method according to claim 5, wherein the sintering the pre-doped material multiple times comprises:
performing a first sintering under a first condition; and
performing a second sintering under a second condition,
wherein the first condition comprises a lower sintering temperature and a shorter sintering time, and the second condition comprises a higher sintering temperature and a longer sintering time.

7. The method according to claim 5 or 6, wherein the sintering the pre-doped material multiple times comprises:
performing a first sintering to the pre-doped material at a temperature of 400°C to 500°C for 3 hours to 5 hours to obtain a first sintered material; and
performing a second sintering to the first sintered material at a temperature of 700°C to 1000°C for 10 hours to 20 hours to obtain the ternary cathode material.

8. The method according to any one of claims 5 to 7, wherein a temperature raising rate in the first sintering is less than or equal to 3°C/min, a temperature raising rate in the second sintering is less than or equal to 5°C/min, and the temperature raising rate in the first sintering is less than the temperature raising rate in the second sintering.

9. The method according to any one of claims 5 to 8, wherein the mixing the ternary cathode precursor, the dopant-containing sol, and the lithium salt together comprises:
making the ternary cathode precursor contact with the dopant-containing sol, and mixing the ternary cathode precursor with the dopant-containing sol to obtain a mixture; and
drying the mixture and then mixing with the lithium salt.

10. The method according to any one of claims 5 to 9, wherein the ternary cathode precursor comprises nickel, cobalt, and manganese elements.

11. The method according to any one of claims 5 to 10, wherein the ternary cathode precursor comprises one or more of hydrated oxides, hydroxides, chlorides, carboxylates, acetates, or carbonates of divalent nickel, cobalt, and manganese.

12. The method according to any one of claims 5 to 11, wherein the ternary cathode precursor satisfies one or both of conditions (1) and (2):
(1) the ternary cathode precursor is represented by a molecular formula of NiₓCo_{y}Mn_{1-x-y}(OH)₂, wherein 0.33<x<0.95 and 0.05<y<0.77;
(2) the average particle size of the ternary cathode precursor particle is in a range of 4 µm to 20 µm.

13. The method according to any one of claims 5 to 12, which satisfies at least one of conditions (1) to (3):
(1) the lithium salt comprises one or more of lithium carbonate, lithium hydroxide, lithium nitrate, lithium acetate, or lithium chloride;
(2) the mass ratio of the ternary cathode precursor to the MAX compound is in a range of 1:0.0005 to 1:0.05;
(3) the molar ratio of lithium elements in the lithium salt to a total amount of transition metal elements in the ternary cathode precursor is in a range of 1.0:1 to 1.1:1.

14. The method according to any one of claims 5 to 13, wherein the providing the dopant-containing sol comprises:
making the MAX compound particles contact with a dispersant in deionized water, and mixing MAX compound particles with the dispersant in the deionized water to obtain a mixture solution; and
ball-milling the mixture solution to achieve an average particle size of 20 nm to 200 nm for the MAX compound particles.

15. The method according to claim 14, which satisfies one or both of conditions (1) and (2):
(1) the mass ratio of the MAX compound particles to the dispersant is in a range of 1:0.01 to 1:1.5;
(2) the dispersant comprises one or more of hexadecyltrimethylammonium chloride, dodecyltrimethylammonium chloride, hexadecylpyridinium chloride, sodium benzenesulfonate, lauroyl glutamic acid, or diethanolamide.

16. The method according to any one of claims 5 to 15, wherein the dopant-containing sol has a solid content of 5% to 50%.

17. The method according to any one of claims 5 to 16, wherein the MAX compound is represented by a molecular formula of TiₘAlCₙ, wherein 0<m<5, 0<n<5;
preferably, the MAX compound is represented by a molecular formula of Tiₙ₊₁AlCₙ, wherein n is 1, 2 or 3;
more preferably, the MAX compound is represented by a molecular formula of Ti₃AlC₂.

18. A cathode plate, comprising the ternary cathode material according to any one of claims 1 to 4, or the ternary cathode material prepared by the method according to any one of claims 5 to 17.

19. A secondary battery, comprising the cathode plate according to claim 18.

20. An electronic device, comprising the secondary battery according to claim 19.
